**Europäisches Patentamt**

**European Patent Office**

**Office européen des brevets**

(19)

(11) Veröffentlichungsnummer: **0 193 552**

**B1**

(12) # EUROPÄISCHE PATENTSCHRIFT

(45) Veröffentlichungstag der Patentschrift:
25.10.89

(51) Int. Cl.⁴: **G 02 C 7/02**

(21) Anmeldenummer: **85904224.4**

(22) Anmeldetag: **19.08.85**

(86) Internationale Anmeldenummer:
**PCT/DE 85/00279**

(87) Internationale Veröffentlichungsnummer:
**WO 86/01309 (27.02.86 Gazette 86/05)**

(54) **MEHRSTÄRKENGLAS.**

(30) Priorität: **17.08.84 DE 3430334**

(43) Veröffentlichungstag der Anmeldung:
**10.09.86 Patentblatt 86/37**

(45) Bekanntmachung des Hinweises auf die Patenterteilung:
**25.10.89 Patentblatt 89/43**

(84) Benannte Vertragsstaaten:
**AT BE CH DE FR GB IT LI LU NL SE**

(56) Entgegenhaltungen:
**EP-A-0 039 284**
**EP-A-0 039 497**
**FR-A-1 411 976**

(73) Patentinhaber: **Optische Werke G. Rodenstock,
Isartalstrasse 43, D-8000 München 5 (DE)**

(72) Erfinder: **BARTH, Rudolf, Sommerweg 1, D-8061
Vierkirchen (DE)**
Erfinder: **GUILINO, Günter, Kriegelsteinerstr. 3,
D-8000 München 5 (DE)**
Erfinder: **KALDER, Dieter, D-6082
Mörfelden/Walldorf (DE)**

(74) Vertreter: **Steinmann, Otto C., Kanzlei Münich,
Steinmann, Schiller Willibaldstrasse 36, D-8000
München 21 (DE)**

**Beschreibung**

Die Erfindung bezieht sich auf ein Mehrstärkenglas mit einem zum Sehen in die Ferne ausgelegten Grundteil und einem zum Sehen in die Nähe ausgelegten Zusatzteil gemäß dem Oberbegriff des Patentanspruchs 1.

Mehrstärkengläser, bei denen die optische Wirkung sowohl im Grundteil als auch im Zusatzteil einen bestimmten konstanten Wert hat, sind allgemein bekannt. Derartige Gläser haben zwar den Vorteil, daß sowohl der zum Sehen in die Ferne verwendete Grundteil als auch der zum Sehen in die Nähe verwendete Zusatzteil verhältnismäßig groß und weitgehend frei von störenden Bildfehlern ist. Derartige, auch als Zweistärkengläser bezeichnete Mehrstärkengläser haben aber den Nachteil, daß der Träger weiterhin eine gewisse Akkomodation aufbringen muß, wenn er beispielsweise beim Arbeiten am Schreibtisch nicht nur in Leseentfernung befindliche Objekte, sondern auch weiter entfernte Objekte, die beispielsweise eine Entfernung von 1 m Meter haben, scharf sehen will.

Dieser Nachteil tritt - wenn auch abgeschwächt - auch bei sogenannten Dreistärkengläsern auf, die zusätzlich zu dem Grundteil und dem zum Sehen in die Nähe ausgelegten Nahteil einen Zwischenteil aufweisen, dessen optische Wirkung die benötigte Akkomodation beim Sehen in Zwischenentfernungen verringern soll.

Zur Vermeidung der vorstehend aufgeführten Nachteile von Zwei- bzw. Dreistärkengläsern sind bereits seit langer Zeit sogenannte Progressivgläser vorgeschlagen worden. Diese Gläser weisen eine Fläche auf, deren Wirkung längs eines im wesentlichen senkrechten Hauptmeridians ansteigt. In der Regel haben progressive Brillengläser in ihrem oberen Bereich einen Fernteil und in ihrem unteren Teil einen Nahteil, zwischen denen eine Progressionszone vorgesehen ist, in der die Wirkung von der Wirkung des Fernteils auf die Wirkung des Nahteils ansteigt. Idealerweise sollten sowohl der Fernteil als auch der Nahteil möglichst groß sein und die Progressionszone ein ungestörtes Sehen für mittlere Entfernungen erlauben.

Es hat sich jedoch herausgestellt, daß diese Forderungen in der Praxis nicht zu verwirklichen sind: Die bekannten Progressivgläser weisen entweder einen vergleichsweise großen Fernteil und einen relativ großen Nahteil auf, wobei die periphere Progressionszone praktisch nicht zum deutlichen Sehen geeignet ist, oder sie stellen eine Kompromißlösung dar, bei der - wenn die Progressionszone ein einigermaßen verzeichnungsfreies Sehen in Zwischenentfernungen erlaubt - der Nahteil so klein ist, daß es nicht möglich ist, auch nur ein DIN A4-Blatt ohne Kopfbewegung zu überblicken, sofern keine Visuseinbußen hingenommen werden sollen. Auch ist der Fernteil durch einen Astigmatismusanstieg insbesondere in den seitlichen unteren Randbereichen eingeengt.

Progressivgläser der erstgenannten Art mit großem Fern- und Nahteil, bei denen die Progressionszone praktisch kein deutliches Sehen erlaubt, sind beispielsweise in der DDR-PS-71 210 beschrieben, während Progressivgläser der zweiten Art, bei denen der Nahteil relativ klein ist, in den US-PSen 2 109 474, 2 878 271 sowie den DE-OSen 2 044 629, 2 336 708, 2 439 127, 3 016 935 (bzw. der entsprechenden EP-A-39 497) und 3 147 952 beschrieben sind. Allen in diesen Druckschriften beschriebenen Flächen liegt dabei folgendes Konzept zugrunde:

Im oberen Teil der Progressionszone und auch in einem Teil des eigentlich als Fernteil vorgesehen Bereichs nimmt die Flächenbrechkraft von der Glasmitte zum Glasrand hin im wesentlichen zu, während sie im unteren Teil der Progressionszone sowie im Nahteil von der Glasmitte zum Glasrand hin abnimmt. Im Randbereich ist demnach die Brechkraftzunahme wesentlich kleiner als auf dem Hauptmeridian, d. h. etwa in der Glasmitte; anders ausgedrückt verringern sich in den Randbereichen die Unterschiede zwischen Fernteil und Nahteil. Durch dieses Konstruktionsprinzip gelingt es, den störenden Astigmatismus weitgehend über die gesamte Fläche zu verteilen, wobei Spitzenwerte in die unteren seitlichen Bereiche "abgedrängt" werden. Nachteilig ist aber der Wirkungsabfall im Nahteil bei gleichzeitigem starkem Astigmatismusanstieg. Beispielsweise beträgt die Breite des Nahteils - wenn man einen Wirkungsabfall im Nahteil von 1 dpt zuläßt - im Bereich des sogenannten Nahbezugspunktes nur noch ca. 15 mm. Damit ist es mit diesen bekannten Progressivgläsern nicht mehr möglich, beispielsweise eine Zeitungsseite voll zu überblicken, so daß zum Lesen Kopfbewegungen erforderlich sind. Darüberhinaus ist bei diesen bekannten Progressivgläsern der Teil der Progressionszone, der zum deutlichen Sehen im Zwischenbereich geeignet ist, aufgrund des rasch ansteigenden Astigmatismus auf einige Millimeter verengt. Deshalb erfordern die bekannten Progressivgläser entweder einen entsprechend der Augenbewegung von der Ferne zur Nähe gewundenen Hauptmeridian oder sie müssen verschwenkt, d. h. mit einem um etwa 6° bis 10° gedrehten Hauptmeridian in die Brillenfassung eingebaut werden. Dies erfordert ein sehr genaues Einschleifen der Gläser in die Brillenfassung; wenn dieses Einschleifen nicht exakt erfolgt, oder sich der "Sitz" der Fassung ändert, kann es leicht zu Unverträglichkeiten kommen.

Verschiedene Autoren - hierzu wird beispielsweise auf die US-PS-2 878 271, Spalte 1, Zeile 55 f. verwiesen - haben die Vermutung geäußert, daß es aus prinzipiellen Gründen nicht möglich ist, Gläser des vorstehend diskutierten Typs weiter zu verbessern, da ein progressives Brillenglas mit einer progressiven Fläche zwangläufig einen gewissen Astigmatismus haben muß.

Es ist deshalb in der EP-A-39 284 bzw. in der US-PS-4 461 550 vorgeschlagen worden, in ein Progressivglas ein zusätzliches Segment einzupressen bzw. einzubringen, das im oberen Teil ein ansteigende und im unteren Teil eine konstante optische Wirkung hat. Hierdurch soll erreicht werden, daß ein größerer Bereich als bei den bekannten progressiven Flächen so weitgehend bildfehlerfrei ist, daß er ein ungestörtes Sehen in die Nähe erlaubt.

Aber auch dieser Vorschlag, von dem zur Formulierung des Oberbegriffs des Anspruchs 1 ausgegangen wird, hat eine Reihe von Nachteilen:

Zum einen ist das zusätzlich eingebrachte Segment vergleichsweise klein. Eine Vergrößerung des Segments dürfte kaum möglich sein, da ansonsten die Verschneidung, d. h. die Stufe zwischen den beiden Flächen (der progressiven Grundfläche und der Segmentfläche) zu groß würde. Dies ist eine Folge der Verwendung einer progressiven Fläche mit bekanntem Grundkonzept, wie es vorstehend beschrieben ist. Darüberhinaus weisen bekannte progressive Flächen vergleichsweise schlechte Abbildungseigenschaften insbesondere im Nahteil auf.

Vor allem aber weist das in der EP-A-39 284 beschriebene Glas einen Sprung in der Wirkung genau in dem Bereich auf, durch den der Brillenträger beim Blicken auf in Zwischenentfernungen befindliche Objekte, wie sie typischerweise im Nahbereich sowie im Zwischenbereich auf einem Schreibtisch vorkommen, blickt. Dies bedeutet, daß er beim Arbeiten am Schreibtisch ein Wirkungssprung in Kauf nehmen muß, was besonders störend ist, da ähnlich wie bei Zwei- bzw. Dreistärkengläsern damit sprunghafte Akkomodationsänderungen beispielsweise beim Arbeiten am Schreibtisch erforderlich sind.

Der Erfindung liegt die Aufgabe zugrunde, ein Brillenglas anzugeben, das nicht nur einen großen Fern- und Nahteil aufweist, sondern das auch ein ungestörtes Sehen in Zwischenentfernungen zuläßt.

Diese Aufgabe wird erfindungsgemäß dadurch gelöst, daß von einem Mehrstärkenglas gemäß dem Oberbegriff des Patentanspruchs 1 ausgegangen wird und dieses Mehrstärkenglas durch die im kennzeichnenden Teil angegebenen Merkmale weitergebildet wird.

Weiterbildungen der Erfindung sind in den Unteransprüchen angegeben.

Erfindungsgemäß ist erkannt worden, daß bei einem Brillenglas, dessen eine Fläche beispielsweise sphärisch oder torisch ausgebildet ist, und dessen andere Fläche einen progressiven Wirkungsanstieg aufweist, nicht gleichzeitig ein großer Fern- und ein großer Nahteil sowie ein zum deutlichen und orientierenden Sehen uneingeschränkt verwendbarer breiter Progressionsbereich realisiert werden können. Hierbei wird unter großer Nahsichtzone ein Bereich verstanden, der zumindest das Überblicken eines DIN A3-Blattes ohne Kopfbewegung nur durch eine Bewegung der Augen möglich macht. Die Progressionszone soll dabei wenigstens in den bei Arbeiten am Schreibtisch üblichen Sehentfernungen zwischen 0,4 und 1,5 m ein deutliches Sehen erlauben.

Der erfindungsgemäße Grundgedanke eines Mehrstärkenglas mit einem als Einstärkenteil ausgebildeten Grundteil und mit einem als progressive Fläche ausgebildeten Zusatzteil hat eine Reihe von überraschenden Vorteilen:

Da die progressive Fläche des Zusatzteils nur noch den eigentlichen Nahteil sowie den Progressionsbereich aufweist, können diese Flächenteile wesentlich freier gestaltet werden als bei einer vollständig verwendeten progressiven Fläche, die einen Fernteil, eine Progressionszone und einen Nahteil aufweist.

Insbesondere ist es damit möglich, bei der Berechnung der progressiven Fläche des Zusatzteils von der Erkenntnis auszugehen, daß eine progressive Fläche unvermeidbar einen gewissen Astigmatismus aufweisen muß, der nicht nur - wie bei dem beispielsweise durch die DE-AS-2 044 639 repräsentierten Stand der Technik - einigermaßen gleichmäßig über die gesamte Fläche verteilt sein kann, sondern der auch in einen bestimmten Teil der progressiven Fläche verlagert werden kann. Dieser Flächenteil, in den der Astigmatismus der verwendeten progressiven Fläche verlagert wird, ist bei dem erfindungsgemäßen Mehrstärkenglas vorteilhafter Weise der Fernteil, der ja für den Zusatzteil nicht verwendet wird. Hierdurch wird es möglich, den progressiven Flächenteil, der für den Zusatzteil verwendet wird, so zu gestalten, daß die Progressionszone vergleichsweise breit und weitgehend astigmatismusfrei ist, also ein deutliches Sehen im Zwischenbereich erlaubt. Darüberhinaus erhält man einen großen nahezu astigmatismusfreien Nahteil, der eine praktisch konstante Wirkung haben kann (Anspruch 6 bzw. 7).

Diese erfindungsgemäß gewählte "Verschiebung" des Astigmatismus in den Flächenteil der progressiven Fläche, der beim "Einsetzen in den Grundteil weggeschnitten" wird, wird durch den im Anspruch 1 angegebenen Verlauf der Krümmungsradien der sog. "Orthogonalschnitte" erreicht:

Erfindungsgemäß ist der Verlauf der Krümmungsradien der Orthogonalschnitte so gewählt, daß die "Linien-Brechkraft längs der Schnitte" wenigstens in einem Bereich beidseits des Hauptmeridians mit zunehmendem Abstand vom Hauptmeridian ansteigt. Dies bedingt - je nachdem, ob der Übergang vom optisch "dünneren" Medium in das optisch "dichtere" Medium oder umgekehrt erfolgt, den im Anspruch 1 angegebenen Verlauf der Krümmungsradien.

Zusätzlich zu der überraschenden Möglichkeit, bei einem Teil einer progressiven Fläche einen weitgehend astigmatismusfreien Wirkungsanstieg sowie einen großen Nahteil realisieren zu können, hat das erfindungsgemäße Mehrstärkenglas eine Reihe von weiteren überraschenden Vorteilen:

Die Verzeichnung der erfindungsgemäß gestalteten progressiven Fläche ist auch im Progressionsbereich sehr gering.

Während bei dem aus der EP-A-39 284 bekannten Brillenglas der Zusatzteil nicht allzu groß ausgeführt werden kann, da sonst die Stufe der beiden Flächen, d. h. die Stufe zwischen den beiden Flächenteilen zu groß werden würde, erlaubt die erfindungsgemäße Konzeption einen außerordentlich großen Zusatzteil, ohne daß die Stufe der beiden Flächen zu groß wird:

Bei dem erfindungsgemäßen Brillenglas sind Zusatzteile mit einer Breite bis zu 45 mm und einer Höhe bis zu 25 mm ohne weiteres möglich. Die Stufe der beiden Flächen beträgt dennoch nur wenige zehntel Millimeter, so daß die Kante zwischen den einzelnen Flächenteilen kaum sichtbar ist.

Dennoch ist es ohne weiteres möglich, den progressiven Flächenteil so in die Grundfläche "einzubetten", daß die prismatischen Wirkungen des Brillenglases im oberen Randbereich des Zusatzteils und in dem daran angrenzenden Bereich des Grundteils im wesentlichen gleich sind (Anspruch 2), so daß praktisch Bildsprungfreiheit gewährleistet ist. Selbstverständlich kann auf die Forderung der Bildsprungfreiheit aber auch verzichtet werden. Dies hat den Vorteil, daß die Stufe zu Null gemacht werden kann.

Darüber hinaus ist es sogar möglich, bei geringster Verschneidung die progressive Fläche so in die Grundfläche einzubetten, daß die Tangentialebene auf dem Hauptmeridian gleich der Tangentialebene des angrenzenden Punktes des Grundteils ist (Anspruch 3).

Die Flächenbrechkraft des Zusatzteils kann dabei von dem Wert des Flächenbrechwerts des Grundteils kontinuierlich auf den Flächenbrechwert des eigentlichen Nahteils zunehmen. Besonders vorteilhaft ist es jedoch, wenn gemäß Anspruch 4 die Progression mit einem größeren Brechwert als dem des Grundteils beginnt. Dies hat den Vorteil, daß mit einer progressiven Fläche mit einem vergleichsweise geringen tatsächlichen Progressionsanstieg eine wesentliche größere Addition erreicht wird. Die Größe der Bildfehler insbesondere im Progressionsbereich ist jedoch in etwa proportional zur Addition, so daß die Bildfehler des erfindungsgemäßen Glases weiter herabgesetzt werden können, da mit einer kleineren Addition, die die Bildfehler bestimmt, ein größerer tatsächlicher Wirkungsunterschied erzielt wird.

Die Berechnung der Flächen kann in an sich bekannter Weise beispielsweise mit Spline-Funktionen erfolgen, wobei vorteilhafter Weise zunächst der Progressionsbereich optimiert wird, ohne daß die Flächeneigenschaften des Fernteils und/oder des Nahteils berücksichtigt werden. Besonders vorteilhaft sowohl hinsichtlich der Flächeneigenschaften als auch hinsichtlich der Einfachheit der Berechnung ist es jedoch, periodische Funktionen zu verwenden, wie sie in der DE-OS-2 814 916 angegeben sind. Auf diese Druckschrift wird im übrigen hinsichtlich aller hier nicht im einzelnen erläuterten Begriffe und Rechenverfahren ausdrücklich Bezug genommen.

Das erfindungsgemäße progressive Brillenglas kann darüberhinaus ohne weiteres so gestaltet werden, daß in dem Progressionsbereich die Linien konstanter Wirkung weitgehend horizontal verlaufen. Zu den Vorteilen dieses Verlaufs der Linien konstanter Wirkung bei einem Glas mit zwei progressiven Flächen bzw. der Linien konstanten Flächenbrechwerts wird auf die DE-AS-2 610 203 verwiesen.

Die Erfindung wird nachstehend anhand eines Ausführungsbeispiels unter Bezugnahme auf die Zeichnung näher beschrieben, in der zeigen:

Fig. 1   eine Aufsicht auf ein erfindungsgemäßes Brillenglas,

Fig. 2   tabellarisch die Pfeilhöhen und Horizontal-Krümmungsradien einer progressiven Fläche, die erfindungsgemäße für den Zusatzteil verwendet wird,

Fig. 3   den Verlauf des Hauptmeridians der in Figur 2 angegebenen Fläche,

Fig. 4   den Flächenastigmatismus der zum Teil verwendeten progressiven Fläche,

Fig. 5   Linien gleichen Flächenastigmatismus für die Fläche gemäß Fig. 1, und

Fig. 6   die Wirkungslinien eines erfindungsgemäßen Brillenglases, bei dem die in Fig. 2 numerisch angegebene Fläche für den Zusatzteil verwendet wird.

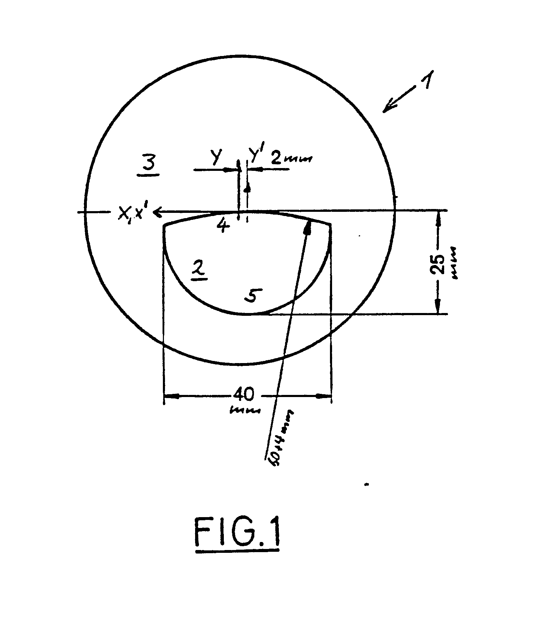

Fig. 1 zeigt zur Erläuterung des prinzipiellen Aufbaus eines erfindungsgemäßen Mehrstärkenglases eine Aufsicht auf ein derartiges Glas. Das erfindungsgemäße Brillenglas weist eine konvexe Vorderfläche 1 und eine konkave Innenfläche auf, die beispielsweise sphärisch, torisch oder atorisch sein kann. In der Vorderfläche 1 befindet sich ein Zusatzteil bzw. Segment 2, das in der bei Mehrstärkengläsern üblichen Weise eingebracht ist. Beispielsweise kann das Segment 2 bei einem aus "Silikatglas" hergestellten Brillenglas eingeschmolzen sein; bei einem aus Kunststoff hergestellten Brillenglas ist es auch möglich, eine Gießform zu verwenden, in der die Fläche des Segments 2 entsprechend eingearbeitet ist.

Die vordere Fläche des Zusatzteils bzw. Segments 2 ist ein Teil einer progressiven Fläche, d. h. die Flächenbrechkraft dieser Fläche nimmt von ihrem oberen Bereich 4 zu dem unteren Teil 5 hin zu. Die Flächenbrechkraft des Grundteils 3 ist im wesentlichen konstant. Die Fläche des Grundteils 3 kann sphärisch oder gegebenenfalls zur Korrektur peripherer Bildfehler asphärisch sein.

Ferner ist in Fig. 1 die Lage eines brillenglasfesten kartesischen Koordinatensystems eingezeichnet.

Die Flächenbrechkraft des Grundteils 3 ist so bemessen, daß sie in Verbindung mit der Flächenbrechkraft der konkaven Innenfläche die für den jeweiligen Brillenträger zum Sehen in die Ferne benötigte Wirkung bereitstellt. Die Flächenbrechkraft des unteren Teils 5, d. h. des eigentlichen Nahteils des Brillenglases ist so bemessen, daß sie in Verbindung mit der konkaven Innenfläche die zum Sehen in die Nähe erforderliche Wirkung ergibt. Die Differenz der beiden Brechwerte wird üblicherweise als Addition der Brillenglases bezeichnet. In dem Bereich 4, d. h. dem Progressionsbereich des Zusatzteils 2 nimmt die Flächenbrechkraft kontinuierlich auf den im wesentlichen konstanten Wert des Nahteils 5 zu. Im oberen Randbereich des Progressionsbereichs 4 kann die Flächenbrechkraft dabei gleich der des Grundteils 3 oder größer als die des Grundteils 3 sein.

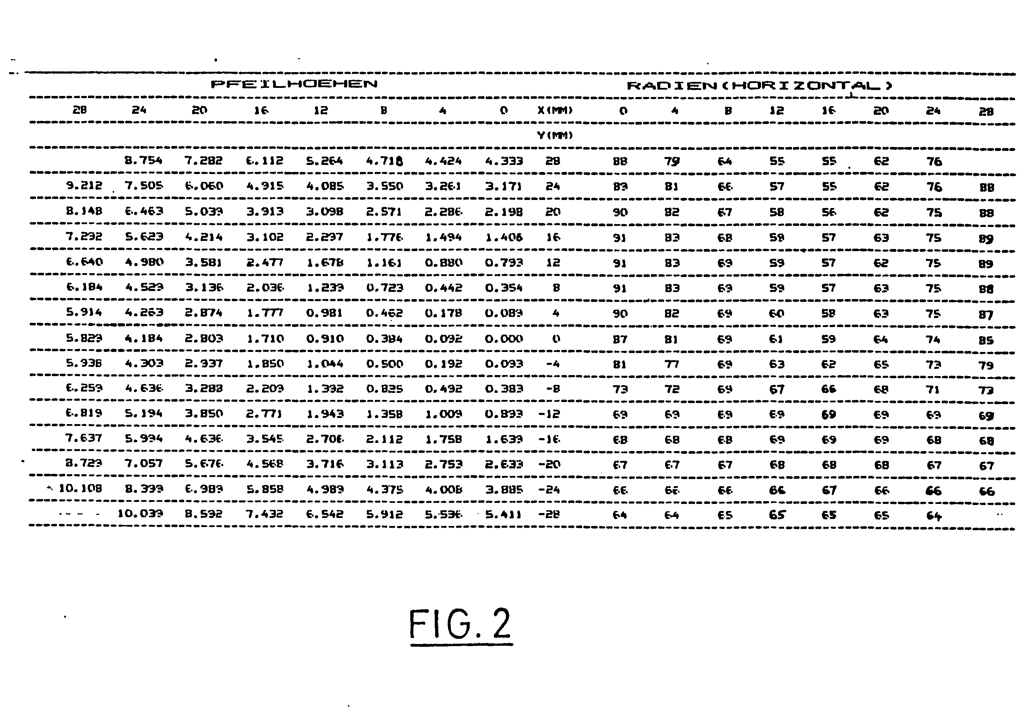

Im folgenden soll ein numerisches Ausführungsbeispiel der Erfindung in Verbindung mit den Fig. 2 bis 6 vorgestellt werden.

Fig. 2 zeigt eine Tabelle, in deren linkem Teil die Pfeilhöhen p für Flächenpunkte (x, y) der progressiven Fläche angegeben sind, von der ein Teil für den Zusatzteil verwendet wird. Unter Pfeilhöhe wird dabei der in z-Richtung gemessene Abstand eines Flächenpunktes (x, y) von dem Scheitelpunkt verstanden.

Die Flächenbrechkraft der in Fig. 2 numerisch angegebenen progressiven Fläche nimmt auf dem Hauptmeridian von 5,56 dpt auf 7,56 dpt zu, da. h. die sog. Addition A beträgt 2,0 dpt. Der Brechungsindex des Mehrstärkenglases ist 1,525.

Die Berechnung der Fläche ist mit dem in der DE-OS-2 814 916 angegebenen Formelsatz vorgenommen worden.

Im rechten Teil der Tabelle sind für diese Flächenpunkte die Horizontal-Krümmumgsradien angegeben, d. h. die Krümmungsradien der Schnittlinien, die sich durch den Schnitt von zur x/z-Ebene paralellen Ebene mit der progressiven Fläche 1 ergeben. Wie man sieht, ist das Verhalten der Krümmungsradien genau entgegengesetzt zu dem beispielsweise in der DE-OS-2 044 639 angegebenen.

Bei dem gezeigten Ausführungsbeispiel ist der Hauptmeridian der progressiven Fläche eben und liegt in der Flächenmitte (x' = 0). Ferner ist der Hauptmeridian eine Nabelpunktlinie.

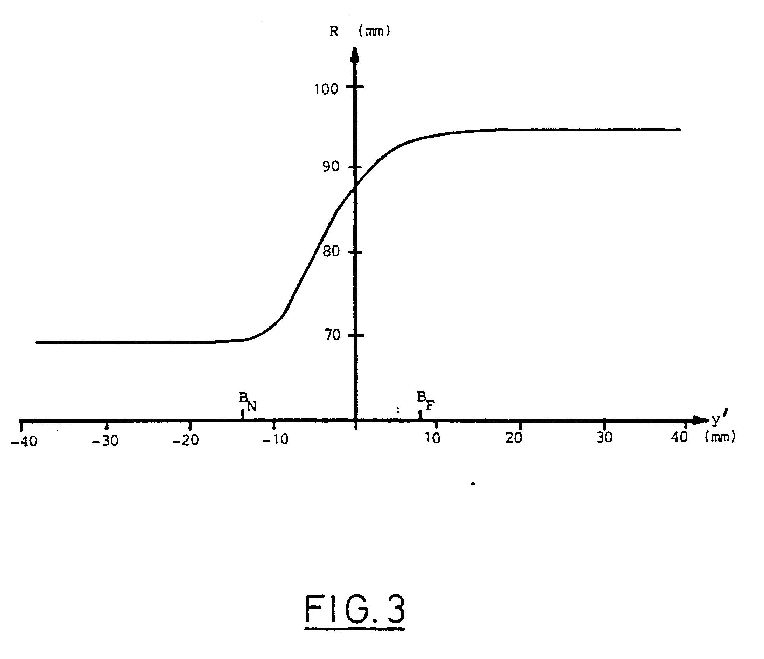

Fig. 3 zeigt die Abhängigkeit des Krümmungsradius R des Hauptmeridians von y für das dargestellte Ausführungsbeispiel. Wie man sieht, ist die Flächenbrechkraft auf dem Hauptmeridian im Fernteil und im Nahteil nahezu konstant, und nimmt in der Progressionszone weitgehend linear vom Wert des Fernteils auf den Wert des Nahteils zu.

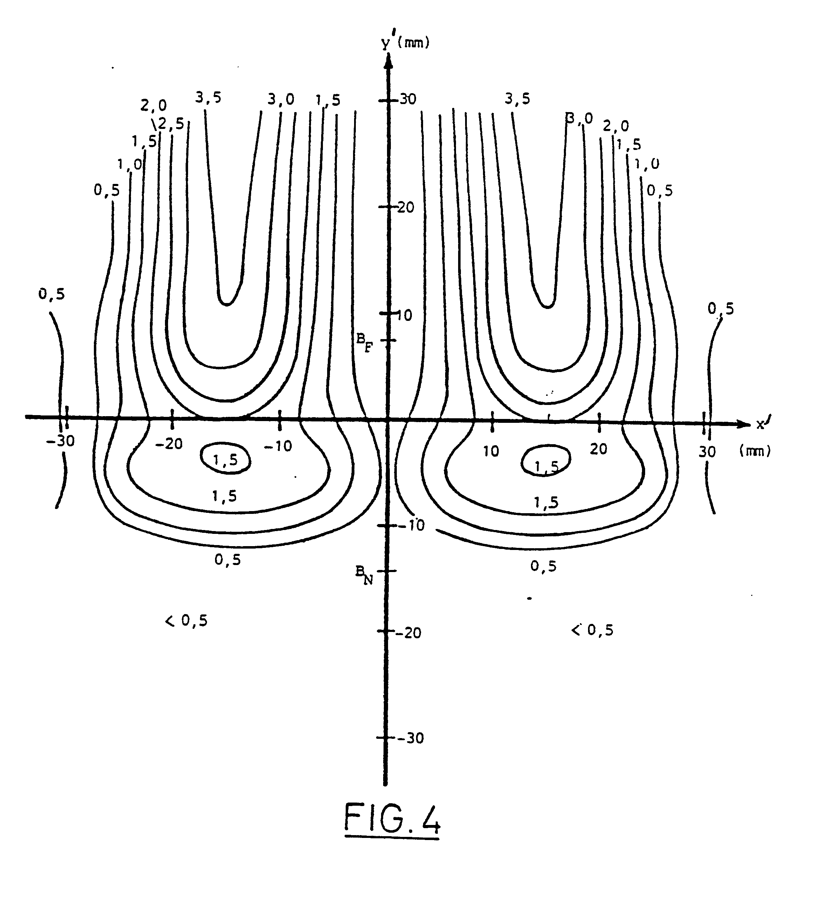

Fig. 4 zeigt den Flächenastigmatismus der Vorderfläche gemäß Fig. 2. Wie man sieht, ist der Flächenastigmatismus insbesondere im Fernteil außerhalb des Hauptmeridians sehr groß. In der etwa von y = + 6 bis y = - 14 mm reichenden Progressionszone ist der Flächenastigmatismus vergleichsweise klein und im großen Nahteil sehr gering, d. h. kleiner als 0,5 dpt.

Mit $B_F$ und $B_N$ sind in den Fig. 4 bis 6 der Fern- bzw. der Nahbezugspunkt nach DIN 58 208 bezeichnet.

Ein Teil der vorstehend beschriebenen progressiven Fläche wird für die äußere Fläche des Zusatzteils bzw. Segments 2 verwendet. Bei dem gezeigten Ausführungsbeispiel bestehen zwischen dem Brillenglasfesten-Koordinatensystem (x, y) und dem Koordinatensystem der progressiven Fläche (x' und y') die folgenden Beziehungen:

$$(*) \qquad x = x' \pm 2 \, mm$$
$$y = y'$$

Die beiden Vorzeichen gelten dabei jeweils für linke bzw. rechte Brillengläser. Der Zusatzteil bzw. des Segment 2 hat dabei die in Fig. 1 angegebenen Abmessungen d. h. die Breite des Zusatzteils beträgt 40 mm während die Höhe des Zusatzteils 25 mm beträgt. Ausdrücklich wird darauf hingewiesen, daß diese Abmessungen nur als Beispiel zu verstehen sind, und das es jederzeit möglich ist, auch größere Zusatzteile zu verwenden.

Diese einfache Beziehung zwischen den beiden Koordinatensystemen wird dadurch möglich, daß die Progressionszone der erfindungsgemäß für den Zusatzteil verwendeten progressiven Fläche im Vergleich mit den Progressionszonen bekannter progressiver Flächen außerordentlich breit ist. Deshalb ist es nicht erforderlich die progressive Fläche beim Einbau zu verschwenken.

Die Flächenbrechkraft des Grundteils kann dabei 5,56 dpt sein, so daß die Addition des erfindungsgemäßen Mehrstärkenglases gleich der Addition der zum Teil verwendeten progressiven Fläche ist. Die Wirkung des Grundteils kann aber auch kleiner, beispielsweise 5,0 dpt sein, so daß der Brechkraftsprung zwischen Grundteil und oberem Rand des Zusatzteils ca. 1 dpt beträgt und damit in der Größenordnung des Restakkomodationsvermögens von Presbiopen liegt. Durch die Kombination des Progressionsbereichs und des Nahteils einer progressiven Fläche mit einem Grundteil, dessen Flächenbrechkraft kleiner ist als die des (weggeschnittenen) Fernteils der progressiven Fläche erhält man den Vorteil, daß die durch die Addition der progressiven Fläche bestimmten Bildfehler im Progressionsbereich und im nahteil bei großer tatsächlicher Addition verringert werden.

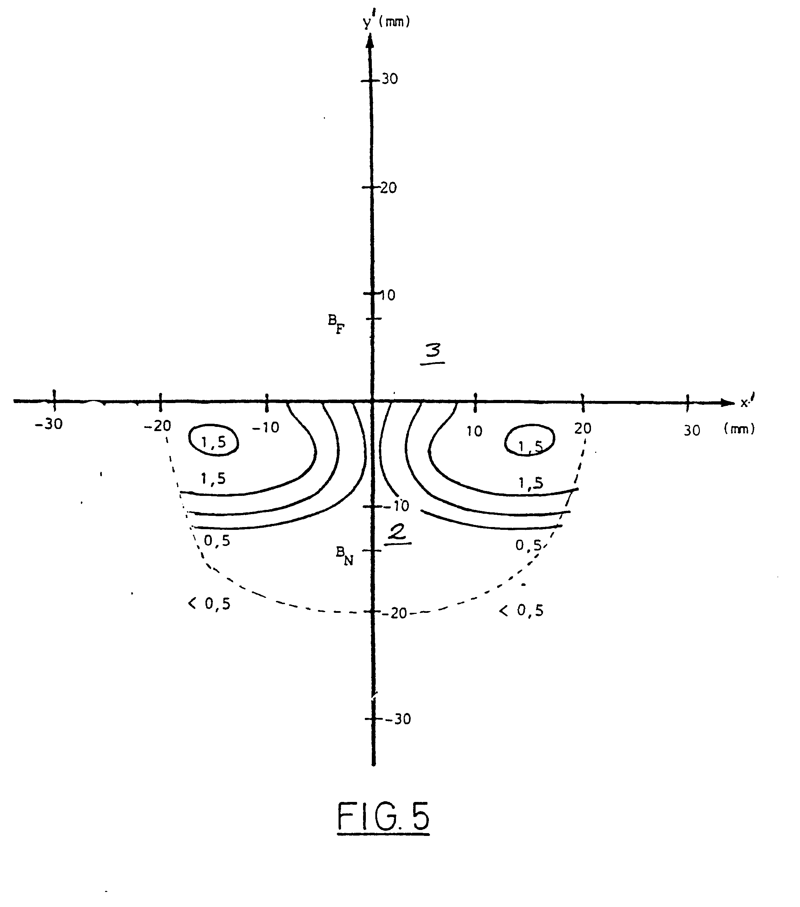

Fig. 5 zeigt den Flächenastigmatismus eines erfindungsgemäßen Mehrstärkenglases, der bei Gläsern mit schwacher Wirkung praktisch gleich dem Gesamtastigmatismus ist.

Wie Fig. 5 zeigt, sind der Fernteil 3 und der Nahteil 5 des Mehrstärkenglases weitgehend astigmatismusfrei d. h. der Gesamtastigmatismus im Nahteil ist kleiner als 0,5 dpt. Im Progressionsbereich ist zwar noch ein gewisser Restastigmatismus vorhanden; der Teil des Progressionsbereichs, in dem längs des Hauptmeridians der Astigmatismus kleiner als 1 dpt ist, ist jedoch mit ca. 8 mm vergleichsweise breit.

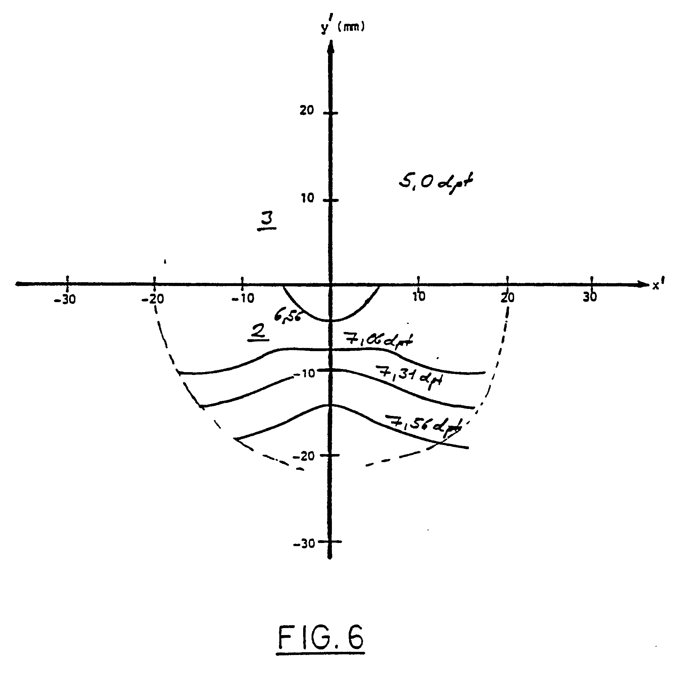

Darüberhinaus ist der Verlauf der Wirkungslinien - wie Fig. 6 zeigt - sehr günstig, da diese insbesondere im Bereich des Hauptmeridians nahezu horizontal verlaufen. Fig. 6 zeigt den Fall, daß die progressive Fläche eine Flächenbrechkraft von 5,56 dpt im Fernteil und eine Flächenbrechkraft von 7,56 dpt im Nahteil hat, während die Flächenbrechkraft des Grundteils 5,0 dpt beträgt.

Vorstehend ist ein Ausführungsbeispiel der Erfindung beschrieben worden. Bei dem gezeigten Ausführungsbeispiel ist für den Zusatzteil eine progressive Fläche verwendet worden, deren Hauptmeridian eben und als Nabelpunktlinie ausgebildet ist. Selbstverständlich ist es auch möglich, eine progressive Fläche für den Zusatzteil 2 zu verwenden, deren Hauptmeridian gewunden und/oder nicht als Nabelpunktlinie ausgebildet ist, sondern einen gewissen Restastigmatismus zumindest auf einem Teil des Hauptmeridians aufweist.

Auch kann das erfindungsgemäße Mehrstärkenglas eine andere Form des Zusatzteils aufweisen. Die Beziehung (*) ist exemplarisch zu verstehen, bei Bedarf können auch andere Beziehungen zwischen dem Koordinatensystem der progressiven Fläche und dem des Mehrstärkenglases gewählt werden: so kann beispielsweise auch eine Verschiebung oder Verdrehung der y-Achsen gewählt werden; ein verschwenkter Einbau wird allerdings aufgrund der besonderen Eigenschaften der erfindungsgemäßen Fläche in den meisten Fällen nicht nötig sein.

Ferner ist es auch möglich, den Zusatzteil in der augenseitigen Fläche auszubilden oder die Verschmelzfläche eines Zusatzsegments progressiv auszubilden. In diesem Falle sind die Flächendaten der Verschmelzfläche für die Differenz des größeren Brechungsindex des Zusatzsegments gegenüber dem Grundteil zu rechnen.

Selbstverständlich kann auch der Verlauf des Hauptmeridians von dem in Fig. 3 gezeigten abweichen: Beispielsweise ist es möglich, einen Hauptmeridian zu verwenden, dessen Krümmungsverlauf Extremwerte zeigt, in denen senkrecht zum Hauptmeridian Nabelpunktlinien verlaufen.

Als Material für das erfindungsgemäße Mehrstärkenglas können Silikatglas, organische Materialien und Materialien mit Brechungsindexgradienten verwendet werden.

Die Herstellung kann in an sich bekannter Weise erfolgen, so daß hierauf nicht näher eingegangen werden muß.

## Patentansprüche

1. Mehrstärkenglas mit einem zum Sehen in die Ferne ausgelegten Grundteil und einem zum Sehen in die Nähe ausgelegten Zusatzteil, bei dem wenigstens eine Fläche aus dem Progressionsbereich und dem Nahteil einer progressiven Fläche besteht, gekennzeichnet durch folgende Merkmale:
- die Brechkraft des Grundteils (3) ist bis auf eventuelle asphärische Korrekturen peripherer Bildfehler konstant, und
- die progressive(n) Fläche(n) des Zusatzteils (2) sind so ausgebildet, daß der Krümmungsradius der Schnittlinien von zum Hauptmeridian orthogonalen Ebenen im gesamten Teil der Fläche, in dem die Flächenbrechkraft ansteigt, mit zunehmendem Abstand vom Hauptmeridian wenigstens in einem Bereich beidseits des Hauptmeridians
-- abnimmt, wenn die progressive Fläche die Vorderfläche ist, bzw.
-- zunimmt, wenn die progressive Fläche die augenseitige Fläche bzw. die Verschmelzfläche ist.

2. Mehrstärkenglas nach Anspruch 1, dadurch gekennzeichnet, daß die prismatischen Wirkungen des Brillenglases im oberen Randbereich des Zusatzteils und in dem daran angrenzenden Bereich des Grundteils im wesentlichen gleich sind.

3. Mehrstärkenglas nach Anspruch 1 oder 2, dadurch gekennzeichnet, daß der Hauptmeridian des Zusatzteils ohne Knick im oberen Randbereich in den Grundteil übergeht.

4. Mehrstärkenglas nach einem der Ansprüche 1 bis 3, dadurch gekennzeichnet, daß die Wirkung des Mehrstärkenglases im oberen Randbereich des Zusatzteils größer ist als die Wirkung des Grundteils.

5. Mehrstärkenglas nach Anspruch 4, dadurch gekennzeichnet, daß die Wirkung des Mehrstärkenglases im oberen Randbereich des Zusatzteils um etwa 1/3 der Addition größer als die Wirkung des Grundteils ist.

6. Mehrstärkenglas nach einem der Ansprüche 1 bis 5, dadurch gekennzeichnet, daß der Zusatzteil in seinem unteren Bereich eine nahezu konstante Wirkung hat.

7. Mehrstärkenglas nach Anspruch 6, dadurch gekennzeichnet, daß der Zusatzteil in dem Bereich mit nahezu konstanter Wirkung angenähert sphärisch ausgebildet ist.

## Claims

1. A multifocal lens with a main portion designed for distance vision and a segment designed for near vision, in which at least one surface from the progression zone and the reading portion consists of a progressive surface, characterised by the following characteristics:
- the focal power of the main portion (3) is constant except for possible aspheric corrections of peripheral aberrations, and
- the progressive surface(s) of the segment (2) is/are designed in such a way that the radius of curvature of the intersection lines of planes orthogonal to the main meridian in all parts of the surface in which the surface focal power increases will - with increasing distance from the main meridian at least in an area on both sides of the main meridian
-- decrease if the progressive area is the front surface, and
-- increase if the progressive area is the back surface or the fusion area.

2. A multifocal lens according to claim 1, characterised by the fact that the prismatic powers of the spectacle lens in the upper marginal area of the segment and in the area of the main portion bordering on this are essentially equal.

3. A multifocal lens according to claims 1 or 2, characterised by the fact that the main meridian of the segment goes over into the main portion with no "break" in the upper marginal area.

4. A multifocal lens according to any of the claims 1 to 3, characterised by the fact that the power of the multifocal lens in the upper marginal area of the segment is greater than the power of the main portion.

5. A multifocal lens according to claim 4, characterised by the fact that the power of the multifocal lens in the upper marginal area of the segment is greater than the power of the main portion by about 1/3 of the addition.

6. A multifocal lens according to any of the claims 1 to 5, characterised by the fact that the segment has a practically constant power in its lower area.

7. A multifocal lens according to claim 6, characterised by the fact that the segment has an approximately spherical design in that area with a practically constant power.

## Revendications

1. Lentille multifocale avec une partie de base dimensionnée pour la vision de loin et une partie additionnelle dimensionnée pour la vision de près, dans laquelle au moins une surface se compose de la zone de progression et de la partie de vision de près d'une surface progessive, caractérisée par les caractéristiques suivantes:

- le pouvoir réfringent de la partie de base (3) est constant à l'exception de corrections éventuelles asphériques de défauts d'image périphériques, et

- la ou les surface(s) progressive(s) de la pièce additionnelle (2) sont constituée(s) de telle façon que le rayon de courbure des lignes de coupe de plans orthogonaux au méridien principal dans la partie commune de la surface dans laquelle le pouvoir réfringent de surface augmente, lorsque la distance au méridien principal augmente au moins dans une zone de part et d'autre du méridien principal,

-- diminue quand la surface progressive est la surface avant, et

-- augmente quand la surface progressive est la surface côté oeil ou la surface de fusion.

2. Lentille multifocale selon la revendication 1, caractérisée en ce que les puissances dioptriques prismatiques du verre de lunette dans la zone de bord supérieure de la pièce additionnelle et dans la zone voisine de la pièce principale sont sensiblement égales.

3. Lentille multifocale selon la revendication 1 ou 2, caractérisée en ce que le méridien principal de la pièce additionnelle continue sans coude dans la zone de bord supérieure dans la pièce de base.

4. Lentille multifocale selon l'une des revendications 1 à 3, caractérisée en ce que la puissance dioptrique de la lentille multifocale dans la zone de bord supérieure de la pièce additionnelle est supérieure à la puissance dioptrique de la pièce de base.

5. Lentille multifocale selon la revendication 4, caractérisée en ce que la puissance dioptrique de la lentille multifocale dans la zone de bord supérieure de la pièce additionnelle est supérieure d'environ 1/3 de l'addition à la puissance dioptrique de la pièce de base.

6. Lentille multifocale selon l'une des revendications 1 à 5 caractérisée en ce que la pièce additionnelle dans sa zone inférieure possède une puissance dioptrique presque constante.

7. Lentille multifocale selon la revendication 6, caractérisée en ce que la pièce additionnelle présente une structure approximativement sphérique dans la zone de puissance dioptrique à peu constante.

FIG.1

|  | PFEILHOEHEN | | | | | | |  | X(MM) | RADIEN (HORIZONTAL) | | | | | | |  |
|---|---|---|---|---|---|---|---|---|---|---|---|---|---|---|---|---|---|
| 28 | 24 | 20 | 16 | 12 | 8 | 4 | 0 | Y(MM) | 0 | 4 | 8 | 12 | 16 | 20 | 24 | 28 |
|  | 8.754 | 7.282 | 6.112 | 5.264 | 4.718 | 4.424 | 4.333 | 28 | 88 | 79 | 64 | 55 | 55 | 62 | 76 |  |
| 9.212 | 7.505 | 6.060 | 4.915 | 4.085 | 3.550 | 3.261 | 3.171 | 24 | 83 | 81 | 66 | 57 | 55 | 62 | 76 | 88 |
| 8.148 | 6.463 | 5.039 | 3.913 | 3.098 | 2.571 | 2.286 | 2.198 | 20 | 90 | 82 | 67 | 58 | 56 | 62 | 75 | 88 |
| 7.292 | 5.623 | 4.214 | 3.102 | 2.237 | 1.776 | 1.494 | 1.406 | 16 | 91 | 83 | 68 | 59 | 57 | 63 | 75 | 89 |
| 6.640 | 4.980 | 3.581 | 2.477 | 1.678 | 1.161 | 0.880 | 0.793 | 12 | 91 | 83 | 69 | 59 | 57 | 62 | 75 | 89 |
| 6.184 | 4.523 | 3.136 | 2.036 | 1.233 | 0.723 | 0.442 | 0.354 | 8 | 91 | 83 | 69 | 59 | 57 | 63 | 75 | 88 |
| 5.914 | 4.263 | 2.874 | 1.777 | 0.981 | 0.462 | 0.178 | 0.083 | 4 | 90 | 82 | 69 | 60 | 58 | 63 | 75 | 87 |
| 5.823 | 4.184 | 2.803 | 1.710 | 0.910 | 0.384 | 0.092 | 0.000 | 0 | 87 | 81 | 69 | 61 | 59 | 64 | 74 | 85 |
| 5.936 | 4.303 | 2.937 | 1.850 | 1.044 | 0.500 | 0.192 | 0.093 | -4 | 81 | 77 | 69 | 63 | 62 | 65 | 73 | 79 |
| 6.253 | 4.636 | 3.288 | 2.209 | 1.392 | 0.825 | 0.492 | 0.383 | -8 | 73 | 72 | 69 | 67 | 66 | 68 | 71 | 73 |
| 6.819 | 5.194 | 3.850 | 2.771 | 1.943 | 1.358 | 1.009 | 0.893 | -12 | 69 | 69 | 69 | 69 | 69 | 69 | 69 | 69 |
| 7.637 | 5.934 | 4.636 | 3.545 | 2.706 | 2.112 | 1.758 | 1.633 | -16 | 68 | 68 | 68 | 69 | 69 | 69 | 68 | 68 |
| 8.723 | 7.057 | 5.676 | 4.568 | 3.716 | 3.113 | 2.753 | 2.633 | -20 | 67 | 67 | 67 | 68 | 68 | 68 | 67 | 67 |
| 10.108 | 8.333 | 6.989 | 5.858 | 4.989 | 4.375 | 4.008 | 3.885 | -24 | 66 | 66 | 66 | 66 | 67 | 66 | 66 | 66 |
|  | 10.033 | 8.592 | 7.432 | 6.542 | 5.912 | 5.536 | 5.411 | -28 | 64 | 64 | 65 | 65 | 65 | 65 | 64 |  |

## FIG.2

FIG.3

FIG.4

FIG.5

9

FIG. 6